# EUROPÄISCHE PATENTSCHRIFT

(11) **EP 2 459 978 B1**
(45) Veröffentlichungstag und Bekanntmachung des Hinweises auf die Patenterteilung: **15.01.2014**
(21) Anmeldenummer: 10739881.0
(22) Anmeldetag: 20.07.2010
(51) Int. Cl.: F03D 11/02, F16H 57/01, F16H 57/031, G01L 3/12

(54) **GETRIEBE FÜR INDUSTRIELLE ANWENDUNGEN ODER WINDKRAFTANLAGEN**
GEAR MECHANISM FOR INDUSTRIAL APPLICATIONS OR WIND POWER PLANTS
TRANSMISSION POUR DES APPLICATIONS INDUSTRIELLES OU DES INSTALLATIONS EOLIENNES

(30) Priorität: 27.07.2009 DE 102009034832
(43) Veröffentlichungstag der Anmeldung: 06.06.2012
(73) Patentinhaber: Siemens Aktiengesellschaft, 80333 München (DE)
(72) Erfinder: DINTER, Ralf Martin, 45888 Gelsenkirchen (DE)
(86) Internationale Anmeldenummer: PCT/EP2010/060473
(87) Internationale Veröffentlichungsnummer: WO 2011/012497

(56) Entgegenhaltungen:
- EP-A2- 1 930 855
- WO-A1-02/18879
- WO-A1-2004/026559
- WO-A1-2006/013089
- WO-A2-99/21150
- DE-A1- 3 804 389
- GB-A- 2 385 425
- US-A- 5 001 937
- US-A- 5 490 430
- US-A1- 2003 015 590

## Beschreibung

Getrieben für industrielle Anwendungen, insbesondere Planetengetrieben, kommt in industriellen Verarbeitungs- und Fertigungsprozessen vielfach eine zentrale Bedeutung zu. An Industriegetriebe wird eine breite Palette von komplexen Anforderungen. Beispielsweise ist eine dieser Anforderungen eine zuverlässige Funktion, die über eine lange Nutzungsdauer bei minimalem Wartungsaufwand zu gewährleisten ist.

Insbesondere in Windkraftanlagen sind Getriebe während ihrer Einsatzdauer einer dynamischen Lastfolge von Dreh- und Biege-momenten sowie axialen und radialen Kräften ausgesetzt. Zur Auslegung von Getrieben werden nutzerseitig definierte Lastkollektive verwendet. Davon abweichende reale Belastungen können Nutzungsdauerverkürzungen und Unterbrechungen von Verarbeitungs-, Fertigungs- oder Energieerzeugungsprozessen verursachen.

Aus der GB2385425 A Figur 3 ist ein Getriebe mit den Merkmale des Oberbegriffes des Anspruchs 1 bekannt.

Der vorliegenden Erfindung liegt die Aufgabe zugrunde, ein Getriebe zu schaffen, das eine zuverlässige Erkennung von drohenden Getriebeüberlastungen und eine Einleitung von Maßnahmen zur deren Vermeidung ermöglicht.

Erfindungsgemäß wird diese Aufgabe durch ein Getriebe für industrielle Anwendungen oder Windkraftanlagen mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Getriebe umfaßt zumindest eine Antriebswelle und zumindest eine Abtriebswelle, die durch eine jeweilige Öffnung an einem Getriebegehäuse treten. Die Antriebswelle bzw. die Abtriebswelle weisen in einem Bereich der jeweiligen Öffnung einen magnetisch oder optisch codierten Abschnitt auf. Dessen Codierung ist durch eine Einwirkung eines Drehmoments bzw. einer Kraft auf die Antriebswelle oder die Abtriebswelle änderbar. Außerdem sind zumindest ein mit der Antriebswelle verbundenes Zahnrad und zumindest ein mit der Abtriebswelle verbundenes Zahnrad vorgesehen, die mittelbar oder unmittelbar im Eingriff miteinander stehen. Darüber hinaus umfaßt das erfindungsgemäße Getriebe zumindest eine Abtasteinrichtung zur berührungslosen Erfassung der magnetischen oder optischen Codierung der Antriebswelle oder Abtriebswelle. Die Abtasteinrichtung ist in einem den magnetisch oder optisch codierten Abschnitt der Antriebswelle oder Abtriebswelle umgebenden Gehäusedeckel angeordnet und elektrisch mit einer Auswerteeinrichtung zur Erfassung einer Getriebeüberlastung verbunden. Auf diese Weise ermöglicht die vorliegende Erfindung eine zuverlässige Erkennung von drohen-den Getriebeüberlastungen und eine Einleitung von Maßnahmen zur deren Vermeidung. Insbesondere durch eine Anordnung der Abtasteinrichtung in einen Gehäusedeckel, der als integriertes Bauteil Meß-, Lager- und Dichtungsfunktionen übernehmen kann, ergibt sich ein verbesserter Schutz für Getriebemeßsensorik sowie eine Reduktion von Montageaufwänden und Fertigungskosten.

Die vorliegende Erfindung wird nachfolgend an einem Ausführungsbeispiel anhand der Zeichnung näher erläutert. Es zeigt
- Figur 1: eine schematische Darstellung eines erfindungsgemäßen Getriebes,
- Figur 2: eine perspektivische Darstellung eines Wellenabschnitts mit einer magnetischen Codierung,
- Figur 3: eine perspektivische Darstellung einer Abtasteinrichtung mit einer Erregerspule und mehreren Meßspulen,
- Figur 4: eine perspektivische Darstellung eines Wellenabschnitts mit einer optischen Codierung,
- Figur 5: eine perspektivische Darstellung einer in einem Gehäusedeckel angeordneten Abtasteinrichtung,
- Figur 6: eine perspektivische Darstellung einer in einem Gehäuse angeordneten Abtasteinrichtung,
- Figur 7: eine perspektivische Darstellung einer in einem Flansch angeordneten Abtasteinrichtung.

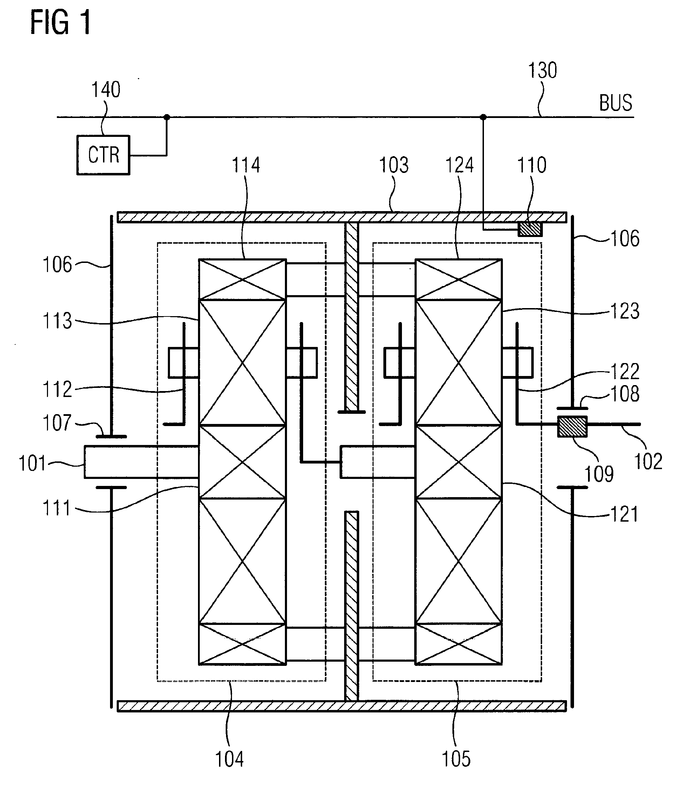

Das in Figur 1 beispielhaft dargestellte Getriebe umfaßt eine Antriebs- 101 und eine Abtriebswelle 102, die in einem Getriebegehäuse 103 gelagert sind. Die Antriebswelle 101 ist mit einem Sonnenrad 111 einer ersten Planetenstufe 104 verbunden, während die Abtriebswelle 102 mit einem mehrere Planetenräder 123 umfassen Planetenträger 122 einer zweiten Planetenstufe 105 verbunden ist. Die erste Planetenstufe 104 umfaßt außerdem einen Planetenträger 112, der mehrere mit einem feststehenden Hohlrad 114 kämmende Planetenräder 113 aufnimmt und mit einem Sonnenrad 121 der zweiten Planetenstufe 105 verbunden ist. Die zweite Planetenstufe 105 weist ebenfalls ein feststehendes Hohlrad 124 auf, das mit den Planetenrädern 123 der zweiten Planetenstufe 105 kämmt.

Das Getriebegehäuse 103 ist stirnseitig jeweils durch einen Gehäusedeckel 106 verschlossen. Die Gehäusedeckel 106 weisen Aufnahmen bzw. Führungselemente für Lager 107, 108 der Antriebs- 101 und Abtriebswelle 102 auf. Im Bereich des Lagers 108 der Abtriebswelle 102 ist im vorliegenden Ausführungsbeispiel ein Drehmomentsensor 109 vorgesehen, der mit einer Auswerteeinrichtung 110 elektrisch verbunden ist. Anstelle oder zusätzlich zu einem Drehmomentsensor können auch Sensoren zur Erfassung von Kräften, Biegemomenten oder Positionen vorgesehen sein. Die Auswerteeinrichtung 110 dient insbesondere zur Erfassung einer Getriebeüberlastung. Zusätzlich könnte auch ein Drehmomentsensor im Bereich des Lagers 107 der Antriebswelle 101 vorgesehen sein. Der Drehmomentsensor 109 umfaßt einen magnetisch oder optisch codierten Abschnitt der Antriebs- oder Abtriebswelle sowie eine Abtasteinrichtung zur berührungslosen Erfassung der magnetischen oder optischen Codierung der Antriebs- oder Abtriebswelle.

Die Auswerteeinrichtung 110 umfaßt eine Speichereinheit zur Aufzeichnung eines Getriebebelastungsverlaufs. Den Getriebebelastungsverlauf repräsentierende Drehmoment- oder Kraftmeßwerte werden in der Speichereinheit als Lastkollektive gespeichert. Die Lastkollektive geben dabei einen zeitlichen Anteil eines Meßwerts oder Meßwertebereichs während eines Getriebebetriebs wieder. Darüber hinaus weist die Auswerteeinrichtung 110 eine Bus-Schnittstelle auf und ist über ein BusSystem 130 entsprechend einer vorteilhaften Ausführungsform mit einer Regelungs- oder Steuerungseinrichtung 140 eines das Getriebe antreibenden Motors oder eines vom Getriebe angetriebenen Generators verbunden.

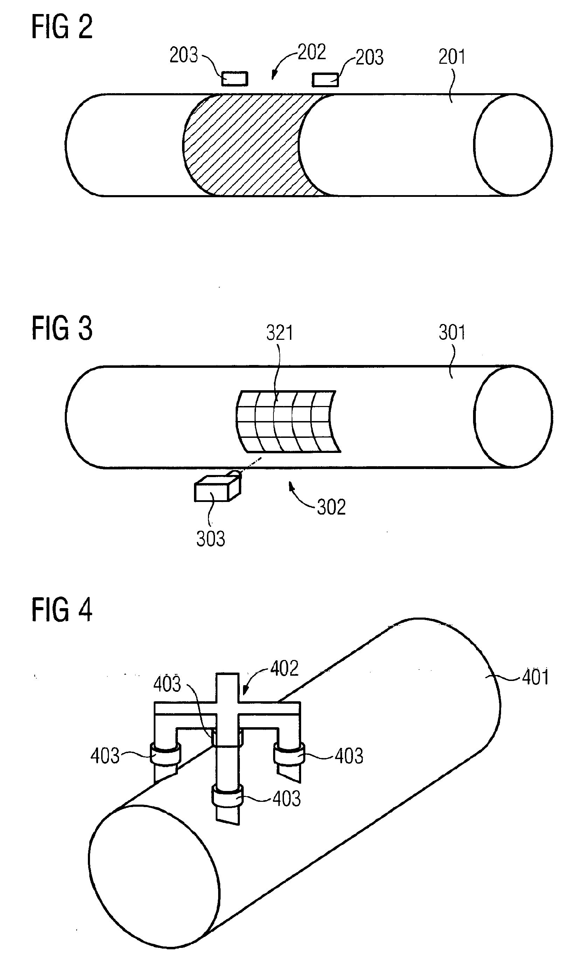

In Figur 2 und 3 ist dargestellt, daß die Antriebs- oder Abtriebswelle 201, 301 in einem Bereich, in dem sie die durch eine jeweilige Öffnung am Getriebegehäuse tritt, einen magnetisch oder optisch codierten Abschnitt 202, 302 aufweist. Dessen Codierung ist durch eine Einwirkung eines Drehmoments oder einer Kraft auf die Antriebs- oder Abtriebswelle 201, 301 änderbar.

Ein magnetisch codierter Abschnitt 202 weist ein vorgegebenes ein- oder mehrdimensionales Magnetisierungsprofil auf. Dabei ist ein aus dem vorgegebenen Magnetisierungsprofil resultierendes überlagertes Magnetfeld proportional zu einem auf die Antriebs- oder Abtriebswelle 201 einwirkenden Drehmoment. Korrespondierend zum magnetisch codierten Abschnitt 202 ist eine Abtasteinrichtung vorgesehen, die eine Mehrzahl von Magnetfeldsensoren umfaßt, beispielsweise elektrische Spulen 203.

Die Antriebs- oder Abtriebswelle kann des weiteren einen ferromagnetischen Abschnitt aufweisen, dessen Permeabilität der Codierung entspricht. Entsprechend der Darstellung in Figur 4 umfaßt die Abtasteinrichtung in diesem Fall eine zentral angeordnete Erregerspule 402 zur Erzeugung eines magnetischen Flusses durch den ferromagnetischen Abschnitt der Antriebsoder Abtriebswelle 401 und eine Mehrzahl von Meßspulen 403 zur Erfassung eines durch die Permeabilität des ferromagnetischen Abschnitts beeinflußten magnetischen Flusses.

Figur 3 ist zu entnehmen, daß in einem optisch codierten Abschnitt 302 der Antriebs- oder Abtriebswelle 301 ein optischer Dehnungsmeßstreifen 321 mit einer Vielzahl von Reflexionsstellen angeordnet ist, deren Abstand durch eine Einwirkung eines Drehmoments oder einer Kraft auf die Antriebsoder die Abtriebswelle 301 änderbar ist. In diesem Fall umfaßt die Abtasteinrichtung eine auf die Reflexionsstellen ausgerichtete Lichtquelle 302 mit integriertem Lichtsensor zur Wellenlängeermittlung von durch die Reflexionsstellen reflektiertem Licht.

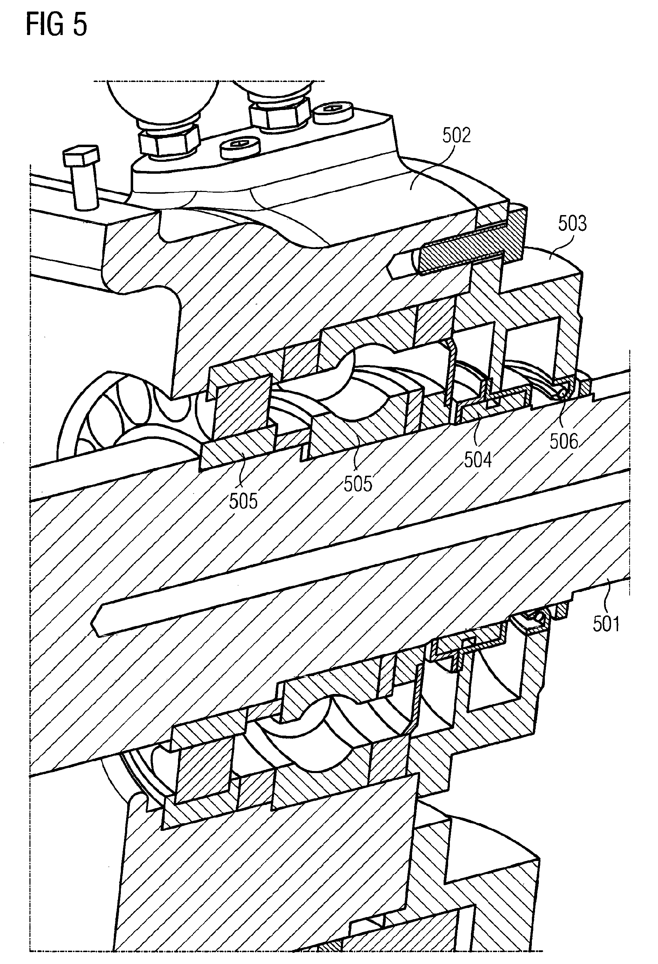

Die in Figur 5 perspektivisch dargestellte Abtasteinrichtung 504 ist in einem den magnetisch oder optisch codierten Abschnitt der Antriebs- oder Abtriebswelle 501 umgebenden Gehäusedeckel 503 angeordnet, durch den das Getriebegehäuse 502 verschlossen ist. In den Gehäusedeckel 503 sind außerdem Wellenlager 505 und eine berührende oder berührungslose Wellendichtung 506 integriert. Auf diese Weise kann der Gehäusedeckel 503 Wälzlager oder Gleitlager führen bzw. deren Abstützkräfte aufnehmen.

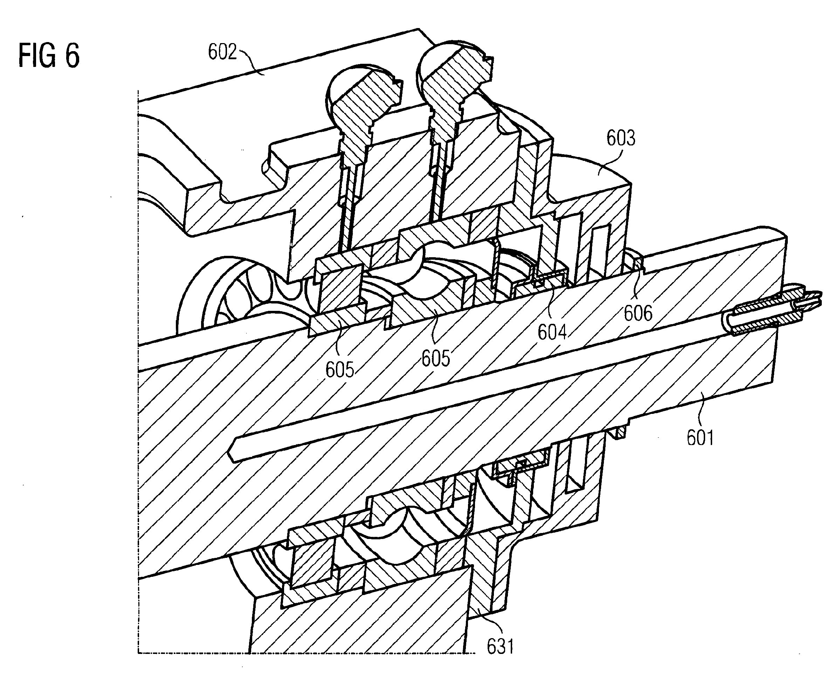

Alternativ zu der in Figur 5 dargestellten Anordnung ober nicht beansprucht kann die Abtasteinrichtung 604 entsprechend Figur 6 in einem mit dem Getriebegehäuse 602 und dem Getriebedeckel 603 fest verbundenen Flansch 631 angeordnet sein, der den magnetisch oder optisch codierten Abschnitt der Antriebs- oder Abtriebswelle 601 umgibt. Der Flansch 631 kann das Getriebe mit berührenden oder berührungslosen Dichtungen 606 abdichten und Wälzlager bzw. Gleitlager 605 führen bzw. deren Abstützkräfte aufnehmen.

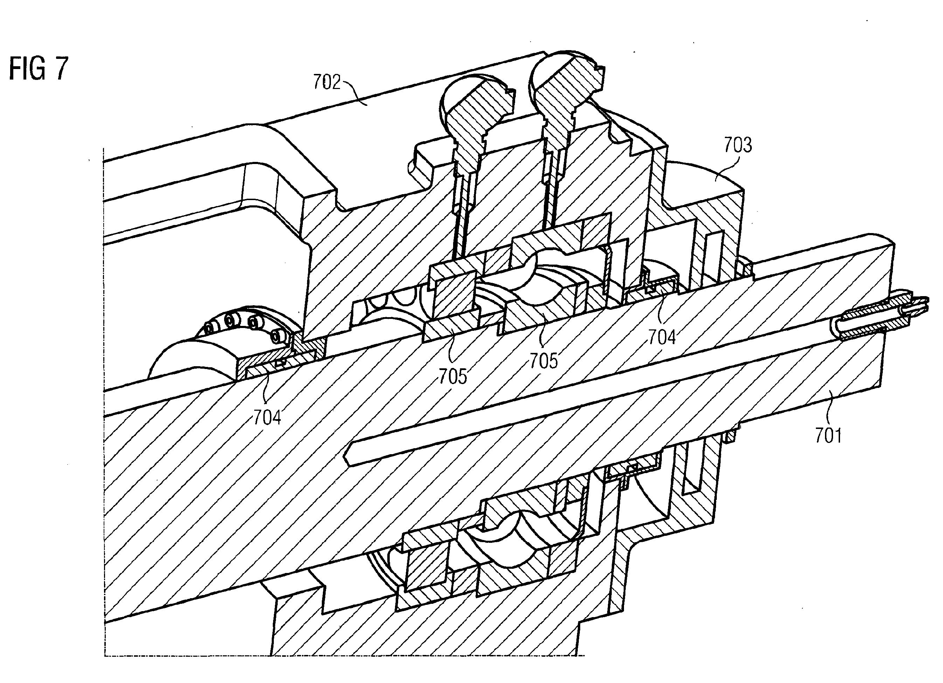

Entsprechend einer weiteren alternativen nicht beanspruchten Anordnung kann die Abtasteinrichtung 704 entsprechend Figur 7 im Getriebegehäuse 702 fest eingebaut sein und dort den magnetisch oder optisch codierten Abschnitt der Antriebs- oder Abtriebswelle 701 umgeben. Dabei kann die Abtasteinrichtung beispielsweise auch in einem Bereich zwischen Gehäusedeckel 703 und Getriebegehäuse 702 angeordnet werden, das zusätzlich Wälzlager oder ein Gleitlager 705 führt oder deren Abstützkräfte aufnimmt.

Die Anwendung der vorliegenden Erfindung ist nicht auf die beschriebenen Ausführungsbeispiele beschränkt.

## Patentansprüche

1. Getriebe für industrielle Anwendungen oder windkraftanlagen mit
- zumindest einer Abtriebswelle und zumindest einer Abtriebswelle, die durch eine jeweilige Öffnung an einem Getriebegehäuse treten, wobei die Antriebswelle und/oder die Abtriebswelle in einem Bereich der jeweiligen Öffnung einen magnetisch oder optisch codierten Abschnitt aufweisen/aufweist, dessen Codierung durch eine Einwirkung eines Drehmoments und/oder einer Kraft auf die Antriebswelle oder die Abtriebswelle änderbar ist,
- zumindest einem mit der Antriebswelle verbundenen Zahnrad und zumindest einem mit der Abtriebswelle verbundenen Zahnrad, die mittelbar oder unmittelbar im Eingriff miteinander stehen,
- zumindest einer Abtasteinrichtung zur beruhrungslosen Erfassung der magnetischen oder optischen Codierung der Antriebswelle oder Abtriebswelle,
- einer mit der zumindest einen Abtasteinrichtung elektrisch verbundenen Auswerteeinrichtung zur Erfassung einer Getriebeüberlastung, **dadurch gekennzeichnet dass** die zumindest einer Abtasteinrichtung in einem den magnetisch oder optisch codierten Abschnitt der Antriebswelle oder Abtriebswelle umgebenden Gehäusedeckel angeordnete ist.

2. Getriebe nach Anspruch 1,
bei dem die zumindest eine Abtasteinrichtung eine Mehrzahl von Magnetfeldsensoren umfaßt.

3. Getriebe nach Anspruch 2,
bei dem der magnetisch codierte Abschnitt ein vorgegebenes ein- oder mehrdimensionales Magnetisierungsprofil aufweist, und bei dem ein aus dem vorgegebenen Magnetisierungsprofil resultierendes überlagertes Magnetfeld proportional zu einem auf die Antriebswelle oder die Abtriebswelle einwirkenden Drehmoment ist

4. Getriebe nach einem der Ansprüche 2 oder 3,
bei dem die Magnetfeldsensoren elektrische Spulen umfassen.

5. Getriebe nach Anspruch 1,
bei dem die Antriebswelle und/oder die Abtriebswelle einen ferromagnetischen Abschnitt aufweisen/aufweist, dessen Permeabilität die Codierung ist, und bei dem die zumindest eine Abtasteinrichtung eine Erregerspule zur Erzeugung eines magnetischen Flusses durch den ferromagnetischen Abschnitt und eine Mehrzahl von Meßspulen zur Erfassung eines durch die Permeabilität des ferromagnetischen Abschnitts beeinflußten magnetischen Flusses umfaßt.

6. Getriebe nach Anspruch 1,
bei dem im optisch codierten Abschnitt ein optischer Dehnungsmeßstreifen mit einer Vielzahl von Reflexionsstellen angeordnet ist, deren Abstand durch eine Einwirkung eines Drehmoments und/oder einer Kraft auf die Antriebswelle oder die Abtriebswelle änderbar ist, und bei dem die zumindest eine Abtasteinrichtung eine auf die Reflexionsatellen ausgerichtete Lichtquelle und einen Lichtsensor zur Wellenlängeermittlung von durch die Reflexionsstellen reflektiertem Licht umfaßt.

7. Getriebe nach einem der Ansprüche 1 bis 6,
bei dem die Abtasteinrichtung zur Erfassung von Biegemomenten und/oder Positionen ausgestaltet ist.

8. Getriebe nach einem der Ansprüche 1 bis 7,
bei dem in den Gehäusedeckel ist ein Wellenlager integriert ist.

9. Getriebe nach einem der Ansprüche 1 bis 8,
bei dem der Gehäusedeckel zumindest eine Wellendichtung aufweist.

10. Getriebe nach einem der Ansprüche 1 bis 9,
bei dem die Auswerteeinrichtung eine Speichereinheit zur Aufzeichnung eines Getriebebelastungsverlaufs aufweist.

11. Getriebe nach einem der Ansprüche 1 bis 10,
bei dem den Getriebebelastungsverlauf repräsentierende Drehmoment- und/oder Kraftmeßwerte in der Speichereinheit als Lastkollektive speicherbar sind, die einen zeitlichen Anteil eines Meßwerts oder Meßwertebereichs während eines Getriebebetriebs wiedergeben.

12. Getriebe nach einem der Ansprüche 1 bis 11,
bei dem die Auswerteeinrichtung mit einer Regelungs- oder Steuerungseinrichtung eines das Getriebe antreibenden Motors oder eines vom Getriebe angetriebenen Generators verbunden ist.

## Claims

1. Gear mechanism for industrial applications or wind power plants comprising
- at least one drive shaft and at least one output shaft which enter a gear mechanism housing through a respective opening, wherein the drive shaft and/or the output shaft have/has a magnetically or optically coded section in a region of the respective opening, the coding of which section may be changed by the effect of a torque and/or a force on the drive shaft or output shaft,
- at least one gear wheel connected to the drive shaft and at least one gear wheel connected to the output shaft which are directly or indirectly engaged with one another,
- at least one scanning unit for detecting the magnetic or optical coding of the drive shaft or output shaft in a contactfree fashion,
- an analysis unit, which is electrically connected to the at least one scanning unit for detecting an overload of the gear mechanism, **characterized in that** the at least one scanning unit is disposed in a housing cover surrounding the magnetically or optically coded section of the drive shaft or output shaft.

2. Gear mechanism according to Claim 1,
in which the at least one scanning unit comprises a plurality of magnetic field sensors.

3. Gear mechanism according to Claim 2,
in which the magnetically coded section has a specified one-dimensional or multi-dimensional magnetization profile, and in which a superimposed magnetic field resulting from the specified magnetization profile is proportional to a torque which acts on the drive shaft or output shaft.

4. Gear mechanism according to one of Claims 2 or 3,
in which the magnetic field sensors comprise electrical coils.

5. Gear mechanism according to Claim 1,
in which the drive shaft and/or output shaft have/has a ferromagnetic section, the permeability of which is the coding, and in which the at least one scanning unit comprises an excitation coil for generating a magnetic flux through the ferromagnetic section, and a plurality of measuring coils for detecting a magnetic flux which is influenced by the permeability of the ferromagnetic section.

6. Gear mechanism according to Claim 1,
in which an optical strain gauge having a multiplicity of reflection points is disposed in the optically coded section, the spacing of which reflection points may be changed by the effect of a torque and/or a force on the drive shaft or output shaft, and in which the at least one scanning unit comprises a light source which is aligned with the reflection points, and a light sensor for determining the wavelength of light reflected by the reflection points.

7. Gear mechanism according to one of Claims 1 to 6,
in which the scanning unit is designed for detecting bending moments and/or positions.

8. Gear mechanism according to one of Claims 1 to 7,
in which a shaft bearing is integrated into the housing cover.

9. Gear mechanism according to one of Claims 1 to 8,
in which the housing cover has at least one shaft seal.

10. Gear mechanism according to one of Claims 1 to 9,
in which the analysis unit comprises a memory unit for recording a gear mechanism load characteristic.

11. Gear mechanism according to one of Claims 1 to 10,
in which the torque and/or force measurements representing the gear mechanism load characteristic can be stored in the memory unit as load spectra which describe a time-related portion of a measurement or measurement range during a gear mechanism operation.

12. Gear mechanism according to one of Claims 1 to 11,
in which the analysis unit is connected to a closed-loop or open-loop controller of a motor which drives the gear mechanism or of a generator which is driven by the gear mechanism.

## Revendications

1. Transmission pour des applications industrielles ou des centrales éoliennes, comprenant
- au moins un arbre menant et au moins un arbre mené, qui pénètrent par une ouverture respective dans un carter de la transmission, l'arbre menant et/ou l'arbre mené a/ont, dans une zone de l'ouverture respective, un tronçon codé magnétiquement ou optiquement, dont le codage peut être modifié par une action d'un couple de rotation et/ou d'une force sur l'arbre menant ou sur l'arbre mené,
- au moins une roue dentée reliée à l'arbre menant et au moins une roue dentée reliée à l'arbre mené, qui sont en prise entre elles directement ou indirectement,
- au moins un dispositif de détection pour la détection sans contact du codage magnétique ou optique de l'arbre menant ou de l'arbre mené,
- un dispositif d'exploitation, qui est relié électriquement au au moins un dispositif de détection et qui est destiné à détecter une surcharge de la transmission,
**caractérisée en ce que** le au moins un dispositif de détection est monté sur un couvercle du carter entourant la partie codée magnétiquement ou optiquement de l'arbre menant ou de l'arbre mené.

2. Transmission suivant la revendication 1,
dans laquelle le au moins un dispositif de détection comprend une multiplicité de capteurs de champ magnétique.

3. Transmission suivant la revendication 2,
dans laquelle la partie codée magnétiquement a un profil d'aimantation monodimensionnel ou pluridimensionnel donné à l'avance et dans laquelle un champ magnétique superposé, provenant du profil d'aimantation donné à l'avance, est proportionnel à un couple de rotation agissant sur l'arbre menant ou sur l'arbre mené.

4. Transmission suivant la revendication 2 ou 3,
dans laquelle les capteurs de champ magnétique comprennent des bobines électriques.

5. Transmission suivant la revendication 1,
dans laquelle l'arbre menant et/ou l'arbre mené a/ont un tronçon ferromagnétique, dont la perméabilité est le codage, et dans laquelle le au moins un dispositif de détection comprend une bobine d'excitation, pour la production d'un flux magnétique passant dans le tronçon ferromagnétique, et une multiplicité de bobines de mesure, pour la détection d'un flux magnétique influencé par la perméabilité du tronçon ferromagnétique.

6. Transmission suivant la revendication 1,
dans laquelle, dans la partie codée optiquement, est montée une jauge de contrainte ayant une pluralité de points de réflexion, dont la distance peut être modifiée par action d'un couple de rotation et/ou d'une force sur l'arbre menant ou sur l'arbre mené, et dans laquelle le au moins un dispositif de détection comprend une source lumineuse dirigée sur les points de réflexion et un capteur de lumière pour la détection de la longueur d'onde de la lumière réfléchie par les points de réflexion.

7. Transmission suivant l'une des revendications 1 à 6,
dans laquelle le dispositif de détection est conformé pour la détection de couples de détection et/ou de positions.

8. Transmission suivant l'une des revendications 1 à 7,
dans laquelle un palier d'arbre est intégré au couvercle du carter.

9. Transmission suivant l'une des revendications 1 à 8,
dans laquelle le couvercle du carter a au moins une étanchéité d'arbre.

10. Transmission suivant l'une des revendications 1 à 9,
dans laquelle le dispositif d'exploitation a une unité de mémoire pour l'enregistrement d'une courbe de charge de la transmission.

11. Transmission suivant l'une des revendications 1 à 10,
dans laquelle des valeurs de mesure de couple de rotation et/ou de force représentant la courbe de charge de la transmission peuvent être mémorisées dans l'unité de mémoire en tant que collectif de charge, qui reproduisent une proportion dans le temps d'une valeur de mesure ou d'une plage de valeurs de mesure pendant un fonctionnement de la transmission.

12. Transmission suivant l'une des revendications 1 à 11,
dans laquelle le dispositif d'exploitation est relié à un dispositif de régulation ou de commande d'un moteur entraînant la transmission ou d'une génératrice entraînée par la transmission.
